# EUROPEAN PATENT SPECIFICATION

(11) **EP 1 571 416 B1**
(45) Date of publication and mention of the grant of the patent: **23.07.2008**
(21) Application number: 05251152.4
(22) Date of filing: 26.02.2005
(51) Int. Cl.: G01C 19/56, G01P 9/04

(54) **Support of vibrating beam near nodal point**
Unterstützung eines vibrierenden Balkens nahe einem Knotenpunt
Support d'une poutre vibrante près d'un point nodal

(30) Priority: 03.03.2004 US 549710 P
(43) Date of publication of application: 07.09.2005
(73) Proprietor: NORTHROP GRUMMAN CORPORATION, Woodland Hills, CA 91367-6675 (US)
(72) Inventor: Stewart, Robert E., Woodland Hills, California 91364 (US)
(74) Representative: Mackenzie, Andrew Bryan

(56) References cited:
- EP-A1- 0 682 407
- EP-A2- 0 751 374
- EP-A2- 0 823 616
- GB-A- 2 208 318
- US-A- 4 267 731
- US-A- 4 836 023

## Description

### TECHNICAL FIELD

The invention relates generally to electromechanical systems and more particularly to supporting vibrating beams in electromechanical systems.

### BACKGROUND

An electromechanical system in one example measures a parameter. The electromechanical system may comprise a micro-electromechanical system ("MEMS") accelerometer or gyroscope that measures the parameter. For example, the accelerometer measures an acceleration and the gyroscope measures angular rate (e.g., rotation). The gyroscope in one example comprises a vibrating beam with high Q degenerate fundamental modes of oscillation. For example, high Q vibrating beams require little energy to sustain oscillation. The vibrating beam in one example is employable for high performance closed loop angular rate sensing. The gyroscope in another example is employable for lower performance open loop angular rate sensing. The mathematical model of the symmetrical vibrating beam is in many aspects similar to a vibrating ring or hemispherical resonator gyroscope ("HRG"). The analytical similarity to the hemispherical resonator gyroscope indicates that the vibrating beam gyroscope has the potential of achieving similar performance.

The gyroscope comprises drive components coupled with the vibrating beam to cause a first oscillation of the vibrating beam. An angular rate of the vibrating beam and the first oscillation induce a Coriolis force on the vibrating beam. For example, the angular rate is about the longitudinal axis of the vibrating beam. The Coriolis force causes a second oscillation of the vibrating beam. The second oscillation is substantially perpendicular to the first oscillation. Feedback components in one example provide feedback on a magnitude of the first oscillation to the drive components for regulation of the first oscillation. Pickoff sensor components sense the second oscillations and apply control signals to null the pickoff signal. The control signals are a measure of the magnitude and polarity of the angular rate of the vibrating beam.

The vibrating beam in one example is supported by a frame. The frame connects with an outer surface of the vibrating beam. The frame allows movement of the vibrating beam upon occurrence of an angular rate. As one shortcoming, the frame absorbs a portion of the oscillation energy of the vibrating beam. The transfer of the oscillation energy from the vibrating beam to the frame reduces the oscillation energy of the vibrating beam. For example, the frame restricts motion of the vibrating beam and reduces the Q of the vibrating beam.

As another shortcoming, the gyroscope is sensitive to changes in the mechanical impedance of the structure to which the vibrating beam is mounted. This effect, known as mounting sensitivity, can result in gyroscope bias drift errors. The bias drift errors in one example result from changes in the mechanical impedance of the gyroscope housing and the structure to which it is mounted. Changes in mechanical impedance can be caused by changes in temperature giving rise to potentially large gyro bias drift temperature sensitivity.

One example of a vibrating gyro is disclosed by Murata Manufacturing Co (EP0823616). The vibrating gyro includes a vibrator formed by joining two piezoelectric substrates, which are polarized in opposite directions, by a metal layer. Electrodes are formed on the main outer surfaces of the piezoelectric substrates. One of the electrodes is split into six electrode portions. As the metal layer, a material having a melting point lower than the Curie point of the piezoelectric substrates is used. Cut portions are formed on the joining sides of the piezoelectric substrates, and high-temperature metal wires or the like are passed through the cut portions, thereby forming support members.

Thus, a need exists for an angular rate sensing gyroscope that promotes a reduction in an amount of oscillation energy transferred from a vibrating beam to support components. A further need exists for an angular rate sensing gyroscope that promotes a reduction in sensitivity to changes in mechanical impedance of the vibrating beam mounting structure.

### SUMMARY

The invention in one embodiment encompasses an apparatus as recited in Claim 1. The apparatus comprises a vibrating beam that comprises a nodal point for oscillation in any one or more of a plurality of substantially perpendicular directions. The oscillation in the any oscillation and sensing angular rate of the vibrating beam. The vibrating beam comprises an aperture that allows a frame to support the vibrating beam near the nodal point. The aperture exposes a flexure component around the nodal point..

The invention in yet another embodiment encompasses a method as recited in Claim 23. An aperture is etched into a vibrating beam of an angular rate sensing gyroscope to form a flexure component at a nodal point within the vibrating beam. The nodal point comprises an intersection location of a first nodal axis of a first oscillation in the vibrating beam and a second nodal axis of a second oscillation in the vibrating beam. A frame is connected with the flexure component to support the vibrating beam near the nodal point to promote a reduction in an amount of oscillation energy that transfers from the vibrating beam into the frame.

### DESCRIPTION OF THE DRAWINGS

Features of exemplary implementations of the invention will become apparent from description, the claims, and the accompanying drawings in which
FIG. 1 is a representation of an exemplary implementation of an apparatus that comprises a vibrating beam and illustrates the nodal axes for vertical oscillation.
FIG. 2 is a representation of the vibrating beam of the apparatus of FIG. 1 and illustrates the nodal axes for horizontal oscillation.
FIG. 3 is one representation of an aperture near a nodal point of the vibrating beam of the apparatus of FIG. 1 where a nodal axis for vertical oscillation and a nodal axis for horizontal oscillation intersect.
FIG. 4 is a sectional representation of the vibrating beam directed along line 4-4 of FIG. 3.
FIG. 5 is a sectional representation of the vibrating beam directed along line 5-5 of FIG. 3.
FIG. 6 is another representation of an aperture near a nodal point of the vibrating beam of the apparatus of FIG. 1 where a nodal axis for vertical oscillation and a nodal axis for horizontal oscillation intersect.
FIG. 7 is a sectional representation of the vibrating beam directed along line 7-7 of FIG. 6.
FIG. 8 is a sectional representation of the vibrating beam directed along line 8-8 of FIG. 6.
FIG. 9 is a representation of a gyroscope that comprises the vibrating beam of the apparatus of FIG. 1 driven by one or more electrostatic drive components and sensed by one or more capacitive pickoff sensors. The top cover of the gyroscope is removed for clarity.
FIG. 10 illustrates a sectional representation of the gyroscope, including the top cover, directed along line 10-10 of FIG. 9.
FIG. 11 is a representation of a gyroscope that comprises the vibrating beam of the apparatus of FIG. 1 driven by one or more piezoelectric drive components and sensed by one or more piezoelectric sensors.

### DETAILED DESCRIPTION

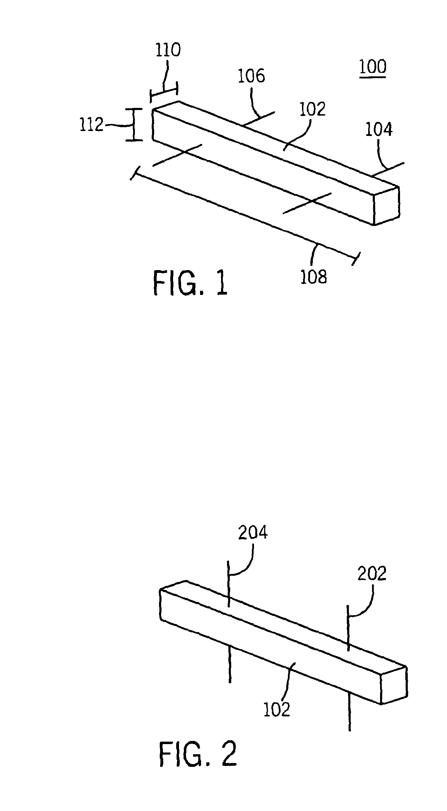

Turning to FIG. 1, an apparatus 100 in one example comprises a vibrating beam 102 employable by a micro-electromechanical system ("MEMS") measurement component. For example, a gyroscope may employ the vibrating beam 102 for high accuracy navigation angular rate sensing.

The vibrating beam 102 in one example comprises a rectangular, triangular, or circular prism. For example, the rectangular prism comprises a length dimension 108 that is greater than a width dimension 110 and a height dimension 112. In another example, the vibrating beam 102 comprises a cross-section that is a hexagon or an octagon. The vibrating beam 102 in one example is constructed from a material with low internal loss to achieve high Q. For example, high Q vibrating beams require little energy to sustain oscillation. The drive and sense methods for the vibrating beam 102 are chosen to excite and read out the motion of the vibrating beam 102 while retaining the high Q. In one example, the vibrating beam 102 comprises an integral silicon beam. In another example, the vibrating beam 102 comprises a plurality of silicon layers, such as three silicon layers bonded together. In yet another example, the vibrating beam 102 comprises an integral crystalline quartz beam. In still yet another example, the vibrating beam 102 comprises a permeable material.

Referring to FIGS. 1-2, the vibrating beam 102 comprises one or more nodal axes 104 and 106 for vertical oscillation (e.g., vertical vibration). For example, vertical oscillation of the vibrating beam 102 may occur with counter rotation about the nodal axes 104 and 106. The nodal axes 104 and 106 stay substantially still during oscillation. The vibrating beam 102 is substantially symmetric for oscillation about the nodal axes 104 and 106. The vibrating beam 102 also comprises one or more nodal axes 202 and 204 for horizontal oscillation (e.g., horizontal vibration). For example, horizontal oscillation of the vibrating beam 102 may occur with counter rotation about the nodal axes 202 and 204. The nodal axes 202 and 204 stay substantially still during oscillation. The vibrating beam 102 is substantially symmetric for oscillation about the nodal axes 202 and 204. The nodal axis 104 for vertical oscillation and the nodal axis 202 for horizontal oscillation in one example intersect at a first nodal point. Also, the nodal axis 106 for vertical oscillation and the nodal axis 204 for horizontal oscillation in one example intersect at a second nodal point.

The vibrating beam 102 comprises a first plane that equally bisects the width 110 of the vibrating beam 102. The vibrating beam 102 comprises a second plane that equally bisects the height 112 of the vibrating beam 102. The first and second nodal points are within an interior of the vibrating beam 102. For example, the first nodal point in one example is located at an intersection point of the nodal axis 104, the nodal axis 202, the first plane, and the second plane. The second nodal point in one example is located at an intersection point of the nodal axis 106, the nodal axis 204, the first plane, and the second plane.

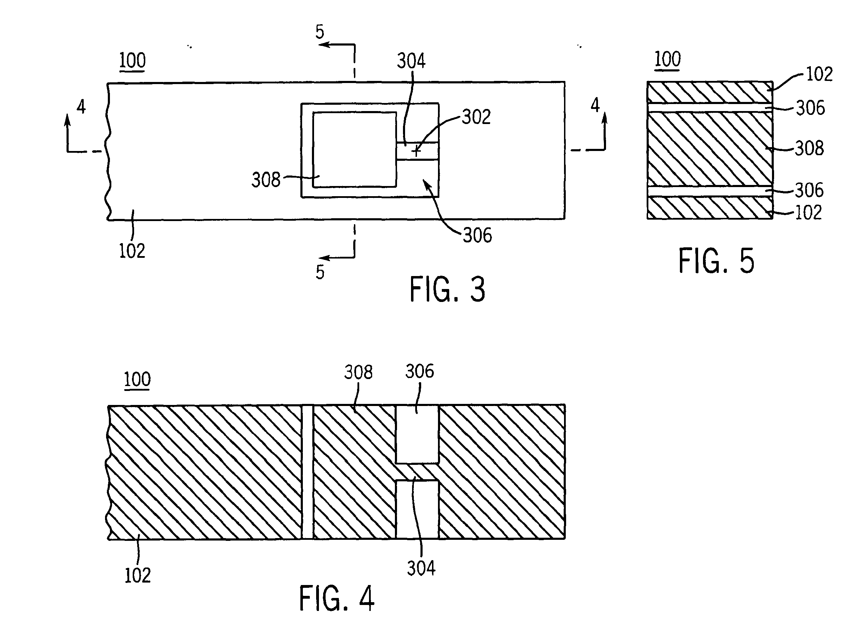

Referring to FIGS. 3-5, the vibrating beam 102 in one example comprises a nodal point 302 (e.g., the first or second nodal point) where the nodal axis 106 (FIG. 1) for vertical oscillation and the nodal axis 204 (FIG. 2) for horizontal oscillation intersect. The nodal point 302 is for oscillation in any one or more of a plurality of substantially perpendicular directions. For example, the nodal point 302 remains substantially still during both vertical oscillation about the nodal axis 106 (FIG. 1) and horizontal oscillation about the nodal axis 204 (FIG. 2).

The vibrating beam 102 in one example is supported by a flexure component 304 connected with a frame. The flexure component 304 allows movement of the vibrating beam 102 upon occurrence of an angular rate. For example, the angular rate is about the longitudinal axis (i.e., directed along line 4-4 of FIG. 3) of the vibrating beam 102. The flexure component 304 in one example comprises a vibration isolator. Pickoff and processing components measure and translate the movement of the vibrating beam 102 into a direction and magnitude of the angular rate. FIG. 4 illustrates a sectional representation of the vibrating beam 102 directed along line 4-4 of FIG. 3. FIG. 5 illustrates a sectional representation of the vibrating beam 102 directed along line 5-5 of FIG. 3.

A flexure component 304 allows horizontal and vertical oscillation of the vibrating beam 102 about the nodal point 302. The flexure component 304 comprises a reduced section of the vibrating beam 102 that lies along a center line of a longitudinal axis of the vibrating beam 102. The nodal point 302 in one example is internal to the vibrating beam 102. For example, the vibrating beam 102 comprises one or more apertures 306 that expose an area around the nodal point 302. The aperture 306 in one example passes through the vibrating beam 102. The aperture 306 surrounds the nodal point 302 and the flexure component 304 to provide space for movement of the vibrating beam 102. The aperture 306 is near the nodal point 302. The aperture 306 allows the frame to support the vibrating beam 102 substantially near the nodal point 302. The aperture 306 comprises an open space etched from a surface of the vibrating beam 102 to expose the nodal point 302 and form the flexure component 304.

The flexure component 304 couples the vibrating beam 102 with a mounting component 308. The mounting component 308 couples the vibrating beam 102 with the frame. By coupling the vibrating beam 102 with the frame near the nodal point 302, no translational oscillation energy of the vibrating beam 102 is transferred to support components, such as the mounting component 308 and the frame. Since the nodal point 302 remains substantially steady, connecting the vibrating beam 102 with the mounting component 308 at the nodal point 302 internal to the vibrating beam 102 promotes a reduction in an amount of the oscillation energy of the vibrating beam 102 that is transferred to the support components. For example, connecting the vibrating beam 102 with the frame at a location on the vibrating beam 102 that is in motion during oscillation would transfer oscillation energy from the vibrating beam 102 to the frame resulting in mounting sensitivity. Less energy is required to sustain oscillation in the vibrating beam 102 and higher Q is achieved if the vibrating beam 102 is connected with the frame at the nodal point 302 than if the vibrating beam 102 is connected at the location on the vibrating beam 102 that is in motion during oscillation.

The nodal point 302 comprises a first nodal point of the vibrating beam 102 where the nodal axis 106 (FIG. 1) for vertical oscillation and the nodal axis 204 (FIG. 2) for horizontal oscillation intersect. The vibrating beam 102 comprises a second nodal point (not shown) where the nodal axis 104 (FIG. 1) for vertical oscillation and the nodal axis 202 (FIG. 2) for horizontal oscillation intersect. The second nodal point is connected to a second flexure component (e.g., analogous to the flexure component 304) and a second mounting component (e.g., analogous to the mounting component 308). The flexure component 304 applies a first moment to the mounting component 308. The second flexure component applies a second moment to the second mounting component. The second moment has an opposite polarity to the first moment. So, the second moment cancels the first moment in the frame.

In one example, the vibrating beam 102 is operated in closed loop mode. In another example, the vibrating beam 102 is operated in open loop mode by making the beam asymmetric and separating the vertical and horizontal resonant frequencies.

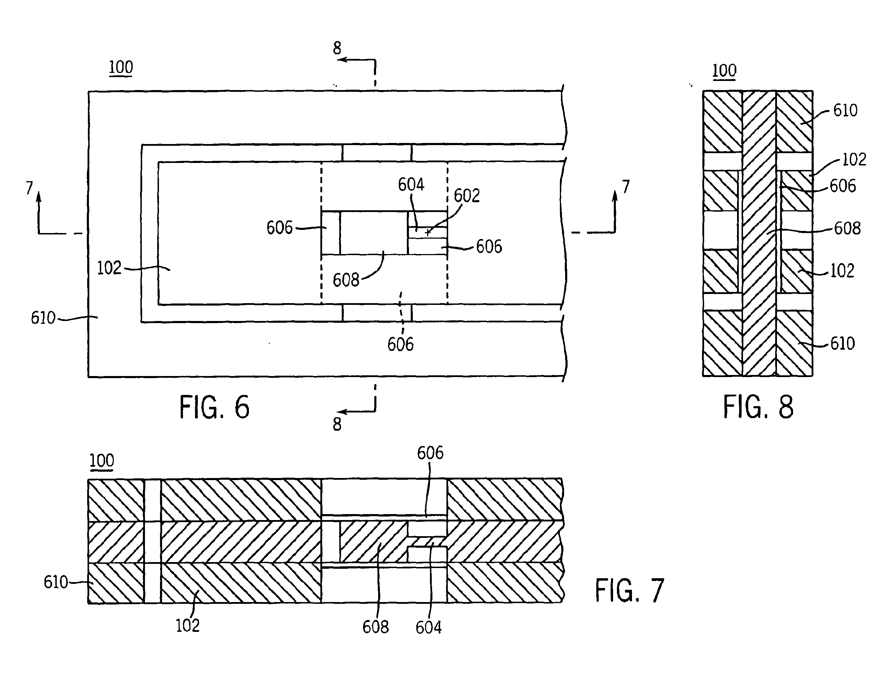

Referring to FIGS. 6-8, the vibrating beam 102 in one example is symmetric for oscillation in any one or more of a plurality of perpendicular directions. The vibrating beam 102 comprises a nodal point 602 where the nodal axis 106 (FIG. 1) for vertical oscillation and the nodal axis 204 (FIG. 2) for horizontal oscillation intersect. The vibrating beam 102 illustrated in FIGS. 6-8 is analogous to the vibrating beam 102 of FIGS. 3-5. For example, the flexure components 304 and 604, apertures 306 and 606, and mounting components 308 and 608 are analogous. In FIGS. 6-8, the aperture 606 is symmetric for oscillation in either of two perpendicular directions. For example, the aperture 606 is symmetric for oscillation about both the nodal axis 106 (FIG. 1) for vertical oscillation and the nodal axis 204 (FIG. 2) for horizontal oscillation.

The aperture 606 passes through the vibrating beam 102 symmetrically in both vertical and horizontal directions. For example, the aperture 606 passes through the vibrating beam 102 from a top surface of the vibrating beam 102 as well as a side surface of the vibrating beam 102. Therefore, the elastic characteristics are substantially similar in both vertical and horizontal oscillation directions for the vibrating beam 102 of FIGS. 6-8. Since the aperture 606 passes through the top surface and the side surface of the vibrating beam 102, the stiffness of the vibrating beam 102 is similar in both vertical and horizontal oscillation directions. The vibrating beam 102 of FIGS 6-8 also has the same resonant frequency in both oscillation directions.

The mounting component 608 in one example passes through the aperture 606 to connect with a frame 610 that supports the vibrating beam 102. For example, the aperture 606 that passes through the side surface of the vibrating beam 102 allows the mounting component 608 to extend out of the vibrating beam 102 and connect with the frame 610. FIG. 7 illustrates a sectional representation of the vibrating beam 102 directed along line 7-7 of FIG. 6. FIG. 8 illustrates a sectional representation of the vibrating beam 102 directed along line 8-8 of FIG. 6.

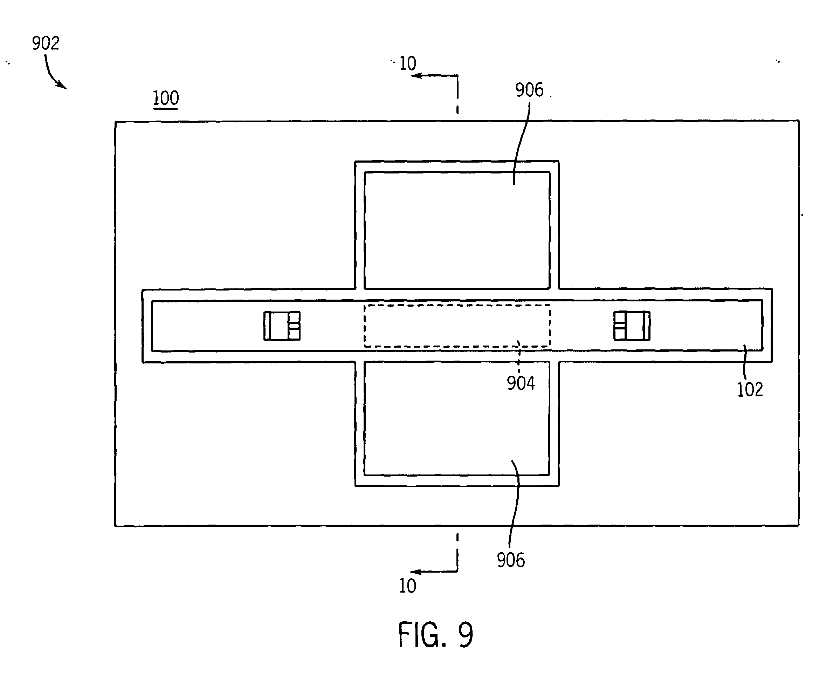

Referring to FIGS. 9-11, to initialize a gyroscope that employs the vibrating beam 102, drive components coupled with the vibrating beam 102 cause a first oscillation of the vibrating beam 102. An angular rate of the vibrating beam 102 and the first oscillation induce a Coriolis force on the vibrating beam 102. The Coriolis force causes a second oscillation of the vibrating beam 102. The second oscillation is substantially perpendicular to the first oscillation. Feedback components in one example provide feedback on a magnitude of the first oscillation to the drive components for regulation of the first oscillation. Pickoff components sense the second oscillations to measure a magnitude of the angular rate of the vibrating beam 102.

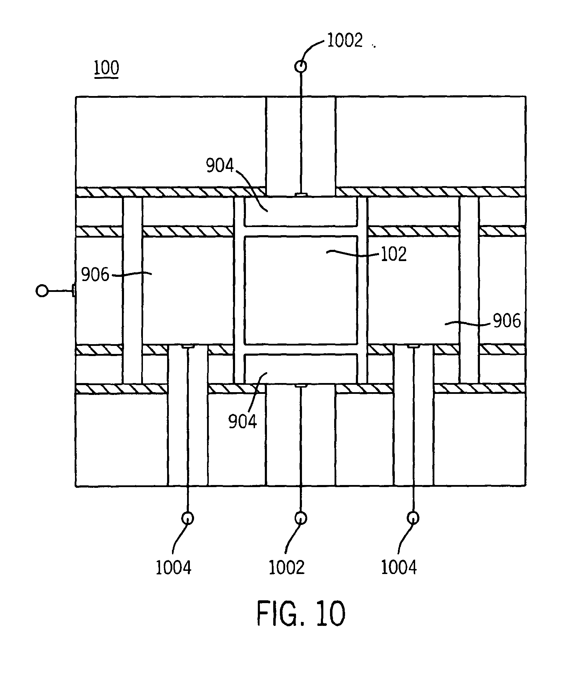

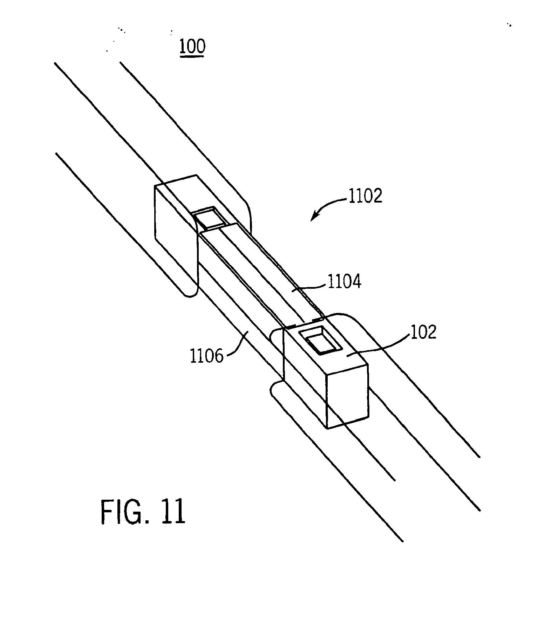

Referring to FIGS. 9-10, a gyroscope 902 illustrates the vibrating beam 102 driven by one or more electrostatic drive components 904 and sensed by one or more capacitive pickoff sensors 906. FIG. 10 illustrates a sectional representation of the gyroscope 902 directed along line 10-10 of FIG. 9. The gyroscope 902 comprises a plurality of connection components 1002 and 1004 coupled with the drive components 904 and/or sensor components 906. The connection components 1002 in one example comprise electrical paths to the drive components 904. For example, electrical signals travel through the connection components 1002 to control the drive components 904. The connection components 1004 comprise electrical paths to sense Coriolis induced oscillation of the vibrating beam 102 and apply control signals to servo the Coriolis induced oscillation to zero. Referring to FIG. 11, a gyroscope 1102 illustrates the vibrating beam 102 driven by one or more piezoelectric drive components 1104 and sensed by one or more piezoelectric pickoff sensors 1106.

The apparatus 100 in one example comprises a plurality of components such as hardware components. A number of such components can be combined or divided in one example of the apparatus 100. The apparatus 100 in one example comprises any (e.g., horizontal, oblique, or vertical) orientation, with the description and figures herein illustrating one exemplary orientation of the apparatus 100, for explanatory purposes.

## Claims

1. An apparatus, comprising:
a vibrating beam (102) that comprises a nodal point (302, 602) for oscillation in any one or more of a plurality of substantially perpendicular directions, wherein the oscillation in the any one or more of the plurality of substantially perpendicular directions is for driving into oscillation and sensing angular rate of the vibrating beam (102);
wherein the vibrating beam (102) comprises an aperture (306, 606) that allows a frame (610) to support the vibrating beam (102) near the nodal point (302,602);
**characterized in that** the aperture (306,606) exposes a flexure component (304, 604) around the nodal point (302,602).

2. The apparatus of claim 1, wherein the nodal point (302,602) is internal to the vibrating beam, (102) wherein the frame (610) couples with the flexure component (304,604) to support the vibrating beam (102).

3. The apparatus of claim 1 or claim 2, wherein the flexure component (304,604) comprises a vibration isolator.

4. The apparatus of claim 1, wherein the nodal point (302,602) comprises an intersection location of a first nodal axis (104, 106) of a first oscillation in the vibrating beam (102) and a second nodal axis (202, 204) of a second oscillation in the vibrating beam (102), wherein the aperture is symmetric for oscillation about the first nodal axis (104,106) and the second nodal axis (202,204).

5. The apparatus of claim 1, wherein the vibrating beam (102) comprises a rectangular, triangular, hexagonal, octagonal, or circular prism.

6. The apparatus of claim 1, wherein the nodal point comprises a first nodal point (302), wherein the aperture comprises a first aperture (306), wherein the vibrating beam (102) comprises a second aperture (606) around a second nodal point (602);
wherein the first (306) and second (606) apertures allow the frame (610) to support the vibrating beam (102) near the first (302) and second (602) nodal points.

7. The apparatus of claim 1, wherein the plurality of substantially perpendicular directions comprises a first direction substantially perpendicular with a second direction;
wherein the first direction comprises a drive oscillation direction of the vibrating beam, wherein the second direction comprises a Coriolis force induced oscillation direction of the vibrating beam (102).

8. The apparatus of claim 7, further comprising a pickoff component (906, 1106) that senses the oscillation of the vibrating beam (102) in the Coriolis force induced oscillation direction to measure a magnitude of the angular rate of the vibrating beam (102).

9. The apparatus of claim 8, wherein the pickoff component (906,1106) comprises a pickoff/forcer component that provides a rebalance force to null the oscillation of the vibrating beam (102) in the Coriolis force induced oscillation direction;
wherein the pickoff/forcer component measures a magnitude and polarity of a signal on the pickoff/forcer component to determine the magnitude and polarity of the angular rate about a longitudinal axis (4-4) of the vibrating beam (102).

10. The apparatus of claim 7, wherein the nodal point (302,602) is internal to the vibrating beam (102);
wherein the flexure component (304,604) allows oscillation of the vibrating beam (102) about the nodal point (302,602) in both the drive oscillation direction and the Coriolis force induced oscillation direction.

11. The apparatus of claim 7, wherein the nodal point (302,602) comprises an intersection location of a first nodal axis (104,106) of the drive oscillation in the vibrating beam (102) and a second nodal axis (202,204) of a Coriolis force induced oscillation in the vibrating beam (102), wherein the aperture (306,606) is symmetric along the first nodal axis (104,106) and the second nodal axis (202,204) to make elastic characteristics of the vibrating beam (102) similar along both the first nodal axis (104,106) and the second nodal axis (202,204).

12. The apparatus of claim 1, wherein the nodal point (302,602) is internal to the vibrating beam (102);
wherein the aperture (306,606) is adjacent to the flexure component (304,604), wherein the aperture (306,606) provides space for the oscillation of the vibrating beam (102).

13. The apparatus of claim 1, wherein the aperture (306,606) is etched out from an outer surface of the vibrating beam (102) to form the flexure component (304,604) at the nodal point (302,602) within the vibrating beam (102).

14. The apparatus of claim 1, wherein the vibrating beam (102) is etched to form a mounting component (308, 608) and the flexure component (304,604) at the nodal point (302,602), wherein the mounting component (308,608) is positioned at one end of the flexure component (304,604);
wherein the frame (610) connects with the mounting component (308,608) to support the vibrating beam (102) at the nodal point (302,602).

15. The apparatus of claim 1, wherein the nodal point (302,602) is substantially still during the oscillation in the plurality of substantially perpendicular directions;
wherein the frame (610) supports the vibrating beam (102) at the flexure component (304,604) around the nodal point (302,602) to promote a reduction in an amount of oscillation energy that transfers from the vibrating beam (102) into the frame (610).

16. The apparatus of claim 1, wherein the nodal point (302,602) is internal to the vibrating beam (102);
wherein the flexure component (304,604) comprises a reduced cross-section of the vibrating beam (102) that lies along a center line of a longitudinal axis of the vibrating beam (102).

17. The apparatus of claim 1, wherein the vibrating beam (102) comprises a plurality of nodal points (302,602), wherein the plurality of nodal points (302,602) comprises the nodal point;
wherein the vibrating beam (102) comprises a plurality of apertures (306,606) that allow the frame (610) to support the vibrating beam (102) near the plurality of nodal points (302,602), wherein the plurality of apertures (306,606) comprises the aperture.

18. The apparatus of claim 1, further comprising:
a drive component (904, 1104) that causes a first oscillation in the vibrating beam (102);
a pickoff component (906, 1106) that senses a second oscillation induced in the vibrating beam (102) by a Coriolis force on the vibrating beam (102);
wherein the nodal point (302,602) is for both the first and second oscillations, wherein the nodal point (302,602) is internal to the vibrating beam (102); and
a frame (610) that connects with the flexure component (304,604) to support the vibrating beam (102) near the nodal point (302,602) within the vibrating beam (102).

19. The apparatus of claim 18, wherein the pickoff component (906,1106) senses the second oscillation to measure a magnitude of an angular rate of the vibrating beam (102).

20. The apparatus of claim 18, wherein the frame (610) supports the vibrating beam (102) at the flexure component (304,604) around the nodal point (302,602) to promote a reduction in an amount of oscillation energy that transfers from the vibrating beam (102) into the frame (610).

21. The apparatus of claim 18, wherein the first oscillation comprises a drive oscillation in a drive direction along a first nodal axis (104, 106), wherein the second oscillation comprises a Coriolis force induced oscillation in a pickoff direction along a second nodal axis (202, 204);
wherein the aperture (306,606) is symmetric along the first nodal axis (104,106) and the second nodal axis (202,204) to make elastic characteristics of the vibrating beam (102) similar in both the drive direction and the pickoff direction.

22. The apparatus of claim 18, wherein the drive component comprises a drive/pickoff component (904, 1104, 906, 1106) that causes the first oscillation in the vibrating beam (102) and measures an amplitude of vibration;
wherein the pickoff component (906,1106) comprises a pickoff/forcer component that senses a second oscillation induced in the vibrating beam (102) by a Coriolis force on the vibrating beam (102) and forces the second oscillation to null.

23. A method, comprising the steps of:
etching an aperture (306, 606) into a vibrating beam (102) of an angular rate sensing gyroscope (902, 1102) to form a flexure component (304, 604) at a nodal point (302,602) within the vibrating beam, wherein the nodal point (302,602) comprises an intersection location of a first nodal axis (104, 106) of a first oscillation in the vibrating beam (102) and a second nodal axis (202, 204) of a second oscillation in the vibrating beam (102) ; and
connecting a frame (610) with the flexure component (304,604) to support the vibrating beam (102) near the nodal point (302,602) to promote a reduction in an amount of oscillation energy that transfers from the vibrating beam (102) into the frame (610).

24. The method of claim 23, wherein the step of etching the aperture (306,606) into the vibrating beam (102) of the angular rate sensing gyroscope (902,1102) to form the flexure component (304,604) at the nodal point (302,602) within the vibrating beam (102) comprises the steps of:
locating the nodal point (302,602) within the vibrating beam (102);
removing material of the vibrating beam (102) from an area around the nodal point (302,602) to allow the frame (610) to support the vibrating beam (102) at the nodal point (302,602);
wherein the first oscillation comprises a drive oscillation in a drive direction along the first nodal axis (104,106), wherein the second oscillation comprises a Coriolis force induced oscillation in a pickoff direction along the second nodal axis (202,204), wherein the drive direction is substantially perpendicular with the pickoff direction; and
forming the aperture (306,606) to be symmetric along the first nodal axis (104,106) and the second nodal axis (202,204) to make elastic characteristics of the vibrating beam (102) similar in both the drive direction and the pickoff direction.

## Patentansprüche

1. Vorrichtung mit:
einem Schwingbalken (102), der einen Knotenpunkt (302, 602) für eine Schwingung in irgend einer oder mehreren einer Anzahl von im Wesentlichen unter einem rechten Winkel zueinander stehenden Richtungen aufweist, wobei die Schwingung in der einen oder mehreren der Anzahl von im Wesentlichen unter einem rechten Winkel zueinander stehenden Richtungen dazu dient, den Schwingbalken (102) in Schwingungen zu versetzen und dessen Winkelgeschwindigkeit zu messen,
wobei der Schwingbalken (102) eine Öffnung (306, 606) aufweist, die es einem Rahmen (610) ermöglicht, den Schwingbalken (102) in der Nähe des Knotenpunktes (302, 602)) zu haltern;
**dadurch gekennzeichnet, dass** die Öffnung (306, 606) ein Biege-Element (304, 604) um den Knotenpunkt (302, 602) herum freilegt.

2. Vorrichtung nach Anspruch 1, bei der der Knotenpunkt (302, 602) innerhalb des Schwingbalkens (102) liegt, wobei der Rahmen (610) mit dem Biege-Element (304, 604) gekoppelt ist, um den Schwingbalken (102) zu haltern.

3. Vorrichtung nach Anspruch 1 oder 2, bei der das Biege-Element (304, 604) einen Schwingungsisolator umfasst.

4. Vorrichtung nach Anspruch 1, bei der der Knotenpunkt (302, 602) eine Schnittpunkt-Position einer ersten Knoten-Achse (104, 106) einer ersten Schwingung in dem Schwingbalken (102) und einer zweiten Knoten-Achse (202, 204) einer zweiten Schwingung in dem Schwingbalken (102) umfasst, wobei die Öffnung für eine Schwingung um die erste Knoten-Achse (104, 106) und die zweite Knoten-Achse (202, 204) symmetrisch ist.

5. Vorrichtung nach Anspruch 1, bei der der Schwingbalken (102) ein rechtwinkliges, dreieckiges, sechseckiges, achteckiges oder kreisförmiges Prisma umfasst.

6. Vorrichtung nach Anspruch 1, bei der der Knotenpunkt einen ersten Knotenpunkt (302) umfasst, wobei die Öffnung eine erste Öffnung (306) umfasst, wobei der Schwingbalken (102) eine zweite Öffnung (606) um einen zweiten Knotenpunkt (602) herum umfasst;
wobei die ersten (306) und zweiten (606) Öffnungen es dem Rahmen (610) ermöglichen, den vibrierenden Balken (102) in der Nähe der ersten (302) und zweiten (602) Knotenpunkte zu haltern.

7. Vorrichtung nach Anspruch 1, bei der die Anzahl von zueinander im Wesentlichen unter einem rechten Winkel zueinander stehenden Richtungen eine erste Richtung umfasst, die im Wesentlichen unter einem rechten Winkel zu einer zweiten Richtung steht;
wobei die erste Richtung eine Antriebs-Schwingungsrichtung des Schwingbalkens umfasst, wobei die zweite Richtung eine durch eine Coriolis-Kraft induzierte Schwingungsrichtung des Schwingbalkens (102) umfasst.

8. Vorrichtung nach Anspruch 7, die weiterhin eine Messwandler-Komponente (906, 1106) umfasst, die die Schwingung des Schwingbalkens (102) in der durch die Coriolis-Kraft induzierten Schwingungsrichtung misst, um die Größe der Winkelgeschwindigkeit des Schwingbalkens (102) zu messen.

9. Vorrichtung nach Anspruch 8, bei der die Messwandler-Komponente (906, 1108) eine Messwandler-/Krafterzeuger-Komponente umfasst, die eine Nachgleich-Kraft liefert, um die Schwingung des vibrierenden Balkens (102) in der durch die Coriolis-Kraft induzierten Schwingungsrichtung zu Null zu machen;
wobei die Messwandler-/Krafterzeuger-Komponente eine Größe und Polarität eines Signals an der Messwandler-/Krafterzeuger-Komponente misst, um die Größe und Polarität der Winkelgeschwindigkeit um eine Längsachse (4-4) des Schwingbalkens (102) zu bestimmen.

10. Vorrichtung nach Anspruch 7, bei der der Knotenpunkt (302, 602) im Inneren des Schwingbalkens (102) liegt;
wobei das Biege-Element (304, 604) eine Schwingung des vibrierenden Balkens (102) um den Knotenpunkt (302, 602) sowohl in der Antriebs-Schwingungsrichtung als auch der durch die Coriolis-Kraft induzierten Schwingungsrichtung ermöglicht.

11. Vorrichtung nach Anspruch 7, bei der der Knotenpunkt (302, 602) eine Schnittpunkt-Position einer ersten Knoten-Achse (104, 106) der Antriebsschwingung in dem Schwingbalken (102) und einer zweiten Knoten-Achse (202, 204) einer durch die Coriolis-Kraft induzierten Schwingung in dem Schwingbalken (102) umfasst, wobei die Öffnung (306, 606) entlang der ersten Knoten-Achse (104, 106) und der zweiten Knoten-Achse (202, 204) symmetrisch ist, um elastische Eigenschaften des Schwingbalkens (102) entlang sowohl der ersten Knoten-Achse (104, 106) als auch der zweiten Knoten-Achse (202, 204) ähnlich zu machen.

12. Vorrichtung nach Anspruch 1, bei der der Knotenpunkt (302, 602) im Inneren des Schwingbalkens (102) liegt;
wobei die Öffnung (306, 606) benachbart zu dem Biege-Element (304, 604) liegt, wobei die Öffnung (306) einen Raum für die Schwingung des Schwingbalkens (102) bereitstellt.

13. Vorrichtung nach Anspruch 1, bei der die Öffnung (306, 606) aus einer Außenoberfläche des Schwingbalkens (102) herausgeätzt ist, um das Biege-Element (304, 604) an dem Knotenpunkt (302, 602) im Inneren des Schwingbalkens (102) zu bilden.

14. Vorrichtung nach Anspruch 1, bei der der Schwingbalken (102) geätzt ist, um eine Befestigungs-Komponente (308, 608) und das Biege-Element (304, 604) an dem Knotenpunkt (302, 602) zu bilden, wobei die Befestigungs-Komponente (308, 608) an einem Ende des Biege-Elementes (304, 604) angeordnet ist;
wobei der Rahmen (610) mit der Befestigungs-Komponente (308, 608) verbunden ist, um den Schwingbalken (102) an dem Knotenpunkt (302, 602) zu haltern.

15. Vorrichtung nach Anspruch 1, bei der der Knotenpunkt (302, 602) während der Schwingung in der Vielzahl von zueinander im Wesentlichen unter rechten Winkel stehenden Richtungen im Wesentlichen still steht;
wobei der Rahmen (610) den Schwingbalken (102) an dem Biege-Element (304, 604) um den Knotenpunkt (302, 602) haltert, um eine Verringerung der Größe einer Schwingungsenergie zu fördern, die von dem Schwingbalken (102) in den Rahmen (610) übertragen wird.

16. Vorrichtung nach Anspruch 1, bei der der Knotenpunkt (302, 602) im Inneren des Schwingbalkens (102) liegt;
wobei das Biege-Element (304, 604) einen verringerten Querschnitt des Schwingbalkens (102) umfasst, der entlang einer Mittellinie einer Längs-Achse des Schwingbalkens (102) liegt.

17. Vorrichtung nach Anspruch 1, bei der der Schwingalken (102) eine Anzahl von Knotenpunkten (302, 602) umfasst, wobei die Anzahl von Knotenpunkten (302, 602) den Knotenpunkt umfasst;
wobei der Schwinalken (102) eine Anzahl von Öffnungen (306, 606) umfasst, die es dem Rahmen (610) ermöglichen, den Schwingalken (102) in der Nähe der Anzahl der Knotenpunkte (302, 602) zu haltern, wobei die Anzahl von Öffnungen (306, 606) die Öffnung umfasst.

18. Vorrichtung nach Anspruch 1, die weiterhin Folgendes umfasst:
eine Antriebs-Komponente (904, 1104), die eine erste Schwingung des Schwingbalkens (102) hervorruft;
eine Messwandler-Komponente (906, 1106), die eine zweite Schwingung misst, die in dem Schwingbalken (102) durch eine Coriolis-Kraft auf den Schwingbalken (102) induziert wird;
wobei der Knotenpunkt (302, 602) für sowohl die ersten als auch die zweiten Schwingungen dient, wobei der Knotenpunkt (302, 602) im Inneren des Schwingbalkens (102) liegt; und
einen Rahmen (610) der mit dem Biege-Element (304, 604) verbunden ist, um den Schwingbalken (102) in der Nähe des Knotenpunktes (302, 602) innerhalb des Schwingbalkens (102) zu haltern.

19. Vorrichtung nach Anspruch 18, bei der die Messwandler-Komponente (906, 1106) die zweite Schwingung misst, um eine Größe einer Winkelgeschwindigkeit des Schwingbalkens (102) zumessen.

20. Vorrichtung nach Anspruch 18, bei der der Rahmen (610) den Schwingbalken (102) an dem Biege-Element (304, 604) um den Knotenpunkt (302, 602) herum haltert, um eine Verringerung der Menge an Schwingungsenergie zu fördern, die von dem Schwingbalken (102) in den Rahmen (610) übertragen wird.

21. Vorrichtung nach Anspruch 18, bei der die erste Schwingung eine Antriebsschwingung in einer Antriebsrichtung um eine erste Knotenachse (104, 106) umfasst, wobei die zweite Schwingung eine durch eine Coriolis-Kraft induzierte Schwingung in einer Messwandler-Richtung entlang einer zweiten Knoten-Achse (202, 204) umfasst;
wobei die Öffnung (306, 606) entlang der ersten Knoten-Achse (104, 106) und der zweiten Knoten-Achse (202, 204) symmetrisch ist, um die elastischen Eigenschaften des Schwingbalkens (102) sowohl in der Antriebsrichtung als auch der Messwandler-Richtung ähnlich zu machen.

22. Vorrichtung nach Anspruch 18, bei der die Antriebskomponente eine Antriebs-/Messwandler-Komponente (904, 1104, 906, 1106) umfasst, die die erste Schwingung in dem Schwingbalken (102) hervorruft und eine Amplitude der Schwingung misst;
wobei die Messwandler-Komponente (906, 1106) eine Messwandler-/Krafterzeuger-Komponente umfasst, die eine zweite Schwingung misst, die in dem Schwingbalken (102) durch eine Coriolis-Kraft auf den Schwingbalken (102) induziert wird, und die zweite Schwingung auf Null zwingt.

23. Ein Verfahren, das die folgenden Schritte umfasst:
Ätzen einer Öffnung (306, 606) in einen Schwingbalken (102) eines WinlCelgeschwlndigkeits-Mess-Gyroskops (902, 1102) zur Bildung eines Biege-Elementes (304; 604) an einem Knotenpunkt (302, 602) im Inneren des Schwingbalkens, wobei der Knotenpunkt (302, 306) eine Schnittpunkt-Position einer ersten Knoten-Achse (104, 106) einer ersten Schwingung in dem Schwingbalken (102) und einer zweiten Knoten-Achse (202, 204) einer zweiten Schwingung in dem Schwingbalken (102) umfasst; und
Verbinden eines Rahmens (610) mit dem Biege-Element (304, 604) zur Halterung des Schwingbalkens (102) in der Nähe des Knotenpunktes (302, 602) zum Fördern einer Verringerung einer Größe einer Schwingungsenergie, die von dem Schwingbalken (102) in den Rahmen (610) übertragen wird.

24. Verfahren nach Anspruch 23, bei dem der Schritt des Ätzens der Öffnung (306, 606) in dem Schwingbalken (102) des Winkelgeschwindigkeits-Mess-Gyroskops (902, 1102) zur Bildung des Biege-Elementes (304, 604) an dem Knotenpunkt (302, 602) in dem Schwingbalken (102) die folgenden Schritte umfasst:
Lokalisieren des Knotenpunktes (302, 602) innerhalb des Schwingbalkens (102);
Entfernen von Material des Schwingbalkens (102) von einem Bereich um den Knotenpunkt (302, 602) herum, um es dem Rahmen (610) zu ermöglichen, den Schwingbalken (102) an dem Knotenpunkt (302, 602) zu haltern;
wobei die erste Schwingung eine Antriebs-Schwingung in einer Antriebsrichtung entlang der ersten Knoten-Achse (104, 106) umfasst, wobei die zweite Schwingung eine durch eine Coriolis-Kraft induzierte Schwingung in einer Messwandler-Richtung entlang der zweiten Knoten-Achse (202, 204) umfasst, wobei die Antriebsrichtung im Wesentlichen und einem rechten Winkel zur Messwandler-Richtung steht; und
Bilden der Öffnung (306, 606) derart, dass sie symmetrisch entlang der ersten Knoten-Achse (104, 106) und der zweiten Knoten-Achse (202, 204) ist, um die elastischen Eigenschaften des Schwingbalkens (102) sowohl in der Antriebsrichtung als auch der Abgriffrichtung ähnlich zu machen.

## Revendications

1. Appareil, comprenant :
une poutre vibrante (102) qui comprend un point nodal (302, 602) pour l'oscillation dans une ou plusieurs d'une pluralité de directions pratiquement perpendiculaires, dans lequel l'oscillation dans une ou plusieurs de la pluralité de directions pratiquement perpendiculaires est prévue pour l'entraînement en oscillation et la détection de la vitesse angulaire de la poutre vibrante (102) ;
dans lequel la poutre vibrante (102) comprend une ouverture (306, 606) qui permet à un châssis (610) de supporter la poutre vibrante (102) à proximité du point nodal (302, 602) ;
**caractérisé en ce que** l'ouverture (306, 606) expose un composant de flexion (304, 604) autour du point nodal (302, 602).

2. Appareil selon la revendication 1, dans lequel le point nodal (302, 602) est interne à la poutre vibrante (102), dans lequel le châssis (610) se couple avec le composant de flexion (304, 604) pour supporter la poutre vibrante (102).

3. Appareil selon la revendication 1 ou la revendication 2, dans lequel le composant de flexion (304, 604) comprend un isolateur de vibrations.

4. Appareil selon la revendication 1, dans lequel le point nodal (302, 602) comprend un emplacement d'intersection d'un premier axe nodal (104, 106) d'une première oscillation dans la poutre vibrante (102) et un second axe nodal (202, 204) d'une seconde oscillation dans la poutre vibrante (102), dans lequel l'ouverture est symétrique pour l'oscillation autour d'un premier axe nodal (104, 106) et un second axe nodal (202, 204).

5. Appareil selon la revendication 1, dans lequel la poutre vibrante (102) comprend un prisme rectangulaire, triangulaire, hexagonal, octogonal ou circulaire.

6. Appareil selon la revendication 1, dans lequel le point nodal comprend un premier point nodal (302), dans lequel l'ouverture comprend une première ouverture (306), dans lequel la poutre vibrante (102) comprend une seconde ouverture (606) autour d'un second point nodal (602) ;
dans lequel les première (306) et seconde (606) ouvertures permettent au châssis (610) de supporter la poutre vibrante (102) à proximité des premier (302) et second (602) points nodaux.

7. Appareil selon la revendication 1, dans lequel la pluralité des directions pratiquement perpendiculaires comprend une première direction pratiquement perpendiculaire à une seconde direction ;
dans lequel la première direction comprend une direction d'oscillation d'entraînement de la poutre vibrante, dans lequel la seconde direction comprend une direction d'oscillation induite par la force de Coriolis de la poutre vibrante (102).

8. Appareil selon la revendication 7, comprenant en outre un composant amovible (906, 1106) qui détecte l'oscillation de la poutre vibrante (102) dans la direction d'oscillation induite par la force de Coriolis pour mesurer une grandeur de la vitesse angulaire de la poutre vibrante (102).

9. Appareil selon la revendication 8, dans lequel le composant amovible (906, 1106) comprend un composant amovible/de force qui fournit une force de rééquilibrage pour annuler l'oscillation de la poutre vibrante (102) dans la direction d'oscillation induite par la force de Coriolis ;
dans lequel le composant amovible/de force mesure une grandeur et une polarité d'un signal du composant amovible/de force pour déterminer la grandeur et la polarité de la vitesse angulaire autour d'un axe longitudinal (4-4) de la poutre vibrante (102).

10. Appareil selon la revendication 7, dans lequel le point nodal (302, 602) est interne à la poutre vibrante (102) ;
dans lequel le composant de flexion (304, 604) permet l'oscillation de la poutre vibrante (102) autour du point nodal (302, 602) à la fois dans la direction d'oscillation d'entraînement et la direction d'oscillation induite par la force de Coriolis.

11. Appareil selon la revendication 7, dans lequel le point nodal (302, 602) comprend un emplacement d'intersection d'un premier axe nodal (104, 106) de l'oscillation d'entraînement dans la poutre vibrante (102) et un second axe nodal (202, 204) d'une oscillation induite par la force de Coriolis dans la poutre vibrante (102), dans lequel l'ouverture (306, 606) est symétrique le long du premier axe nodal (104, 106) et le second axe nodal (202, 204) pour rendre les caractéristiques élastiques de la poutre vibrante (102) similaires à la fois au premier axe nodal (104, 106) et au second axe nodal (202, 204).

12. Appareil selon la revendication 1, dans lequel le point nodal (302, 602) est interne à la poutre vibrante (102) ;
dans lequel l'ouverture (306, 606) est adjacente au composant de flexion (304, 604), dans lequel l'ouverture (306, 606) fournit l'espace pour l'oscillation de la poutre vibrante (102).

13. Appareil selon la revendication 1, dans lequel l'ouverture (306, 606) est gravée sur une surface externe de la poutre vibrante (102) pour former le composant de flexion (304, 604) au niveau du point nodal (302, 602) à l'intérieur de la poutre vibrante (102).

14. Appareil selon la revendication 1, dans lequel la poutre vibrante (102) est gravée pour former un composant de montage (308, 608) et le composant de flexion (304, 604) au niveau du point nodal (302, 602), dans lequel le composant de montage (308, 608) est positionné au niveau d'une extrémité du composant de flexion (304, 604) ;
dans lequel le châssis (610) se raccorde avec le composant de montage (308, 608) pour supporter la poutre vibrante (102) au niveau du point nodal (302, 602).

15. Appareil selon la revendication 1, dans lequel le point nodal (302, 602) est pratiquement immobile pendant l'oscillation dans la pluralité des directions pratiquement perpendiculaires ;
dans lequel le châssis (610) supporte la poutre vibrante (102) au niveau du composant de flexion (304, 604) autour du point nodal (302, 602) pour favoriser une réduction de la quantité d'énergie d'oscillation qui est transférée de la poutre vibrante (102) dans le châssis (610).

16. Appareil selon la revendication 1, dans lequel le point nodal (302, 602) est interne à la poutre vibrante (102) ;
dans lequel le composant de flexion (304, 604) comprend une section transversale réduite de la poutre vibrante (102) qui se trouve le long d'une ligne centrale d'un axe longitudinal de la poutre vibrante (102),

17. Appareil selon la revendication 1, dans lequel la poutre vibrante (102) comprend une pluralité de points nodaux (302, 602), dans lequel la pluralité de points nodaux (302, 602) comprend le point nodal ;
dans lequel la poutre vibrante (102) comprend une pluralité d'ouvertures (306, 606) qui permet au châssis (610) de supporter la poutre vibrante (102) à proximité de la pluralité de points nodaux (302, 602), dans lequel la pluralité d'ouvertures (306, 606) comprend l'ouverture.

18. Appareil selon la revendication 1, comprenant en outre ;
un composant d'entraînement (904, 1104) qui provoque une première oscillation dans la poutre vibrante (102) ;
un composant amovible (906, 1106) qui détecte une seconde oscillation induite dans la poutre vibrante (102) par une force de Coriolis sur la poutre vibrante (102) ;
dans lequel le point nodal (302, 602) est prévu à la fois pour les première et seconde oscillations, dans lequel le point nodal (302, 602) est interne à la poutre vibrante (102) ; et
un châssis (610) qui se raccorde avec le composant de flexion (304, 604) pour supporter la poutre vibrante (102) à proximité du point nodal (302, 602) à l'intérieur de la poutre vibrante (102).

19. Appareil selon la revendication 18, dans lequel le composant amovible (906, 1106) détecte la seconde oscillation pour mesurer une grandeur d'une vitesse angulaire de la poutre vibrante (102).

20. Appareil selon la revendication 18, dans lequel le châssis (610) supporte la poutre vibrante (102) au niveau du composant de flexion (304, 604) autour du point nodal (302, 602) pour favoriser la réduction d'une quantité d'énergie d'oscillation qui est transférée de la poutre vibrante (102) dans le châssis (610).

21. Appareil selon la revendication 18, dans lequel la première oscillation comprend une oscillation d'entraînement dans une direction d'entraînement le long d'un premier axe nodal (104, 106), dans lequel la seconde oscillation comprend une oscillation induite par la force de Coriolis dans une direction de retrait le long du second axe nodal (202, 204) ;
dans lequel l'ouverture (306, 606) est symétrique le long du premier axe nodal (104, 106) et du second axe nodal (202, 204) pour rendre les caractéristiques élastiques de la poutre vibrante (102) similaires à la fois dans la direction d'entraînement et la direction de retrait.

22. Appareil selon la revendication 18, dans lequel le composant d'entraînement comprend un composant d'entraînement/amovible (904, 1104, 906, 1106) qui provoque la première oscillation dans la poutre vibrante (102) et mesure une grandeur de vibration ;
dans lequel le composant amovible (906, 1106) comprend un composant amovible/de force qui détecte une seconde oscillation induite dans la poutre vibrante (102) par une force de Coriolis sur la poutre vibrante (102) et force la seconde oscillation jusqu'à une valeur nulle.

23. Procédé comprenant les étapes consistant à :
graver une ouverture (306, 606) dans une poutre vibrante (102) d'un gyroscope de détection des vitesses angulaires (902, 1102) pour former un composant de flexion (304, 604) au niveau d'un point nodal (302, 602) à l'intérieur de la poutre vibrante, dans lequel le point nodal (302, 602) comprend un emplacement d'intersection d'un premier axe nodal (104, 106) d'une première oscillation dans la poutre vibrante (102) et un second axe nodal (202, 204) d'une seconde oscillation dans la poutre vibrante (102) ; et
raccorder un châssis (610) avec le composant de flexion (304, 604) pour supporter la poutre vibrante (102) à proximité du point nodal (302, 602) pour favoriser une réduction de quantité d'énergie d'oscillation qui est transmise de la poutre vibrante (102) dans le châssis (610).

24. Procédé selon la revendication 23, dans lequel l'étape consistant à graver l'ouverture (306, 606) dans la poutre vibrante (102) du gyroscope de détection de vitesse angulaire (902, 1102) pour former le composant de flexion (304, 604) au niveau du point nodal (302, 602) à l'intérieur de la poutre vibrante (102), comprenant les étapes consistant à :
localiser le point nodal (302, 602) à l'intérieur de la poutre vibrante (102) ;
retirer le matériau de la poutre vibrante (102) d'une zone située autour du point nodal (302, 602) pour permettre au châssis (610) de supporter la poutre vibrante (102) au niveau du point nodal (302, 602) ;
dans lequel la première oscillation comprend une oscillation d'entraînement dans une direction d'entraînement le long du premier axe nodal (104, 106), dans lequel la seconde oscillation comprend une oscillation induite par la force de Coriolis dans une direction de retrait le long du second axe nodal (202, 204), dans lequel la direction d'entraînement est pratiquement perpendiculaire à la direction de retrait ; et
former l'ouverture (306, 606) pour être symétrique le long du premier axe nodal (104, 106) et du second axe nodal (202, 204) pour rendre les caractéristiques élastiques de la poutre vibrante (102) similaires à la fois dans la direction d'entraînement et la direction de retrait.
